# Europäisches Patentamt

## European Patent Office

## Office européen des brevets

(19)

(11) Veröffentlichungsnummer: **0 154 281**
**B1**

(12) # EUROPÄISCHE PATENTSCHRIFT

(45) Veröffentlichungstag der Patentschrift:
**04.10.89**

(51) Int. Cl.⁴: **C 04 B 7/48,** C 04 B 7/60

(21) Anmeldenummer: **85102072.7**

(22) Anmeldetag: **26.02.85**

(54) **Verfahren und Vorrichtung zur Herstellung von Zement.**

(30) Priorität: **28.02.84 DE 3407154**

(43) Veröffentlichungstag der Anmeldung:
**11.09.85 Patentblatt 85/37**

(45) Bekanntmachung des Hinweises auf die Patenterteilung:
**04.10.89 Patentblatt 89/40**

(84) Benannte Vertragsstaaten:
**AT BE CH DE FR GB IT LI NL SE**

(56) Entgegenhaltungen:
**DE-A-2 126 121**
**DE-A-2 361 060**
**FR-A-1 237 608**
**FR-A-2 446 266**
**US-A-4 201 546**

(73) Patentinhaber: **Klöckner- Humboldt- Deutz Aktiengesellschaft, Deutz- Mülheimer- Strasse 111 Postfach 80 05 09, D-5000 Köln 80 (DE)**
Patentinhaber: **Readymix Zementwerke GmbH & Co. KG, Am Kollenbach 27 Postfach 1865- 66, D-4720 Beckum 1 (DE)**

(72) Erfinder: **Ramesohl, Hubert, Mohnweg 22, D-5060 Bergisch Gladbach 1 (DE)**
Erfinder: **Steinbiss, Eberhard, Höxterstrasse 18, D-5000 Köln 91 (DE)**
Erfinder: **Pisters, Heinz, Dr., Stiftsstrasse 18, D-4720 Beckum (DE)**

(74) Vertreter: **Beisner, Klaus, Dipl.- Ing., c/o KHD Humboldt Wedag AG Patente und Lizenzen Wiersbergstrasse Postfach 91 04 57, D-5000 Köln 91 (DE)**

LIBER, STOCKHOLM 1989

EP 0 154 281 B1

## Beschreibung

Die Erfindung betrifft ein Verfahren und eine Vorrichtung zur Herstellung von Zement, wobei Rohmaterial zu Klinker gebrannt, dieser gekühlt und zu einem mehlförmigen Zement-Endprodukt vermahlen wird, wobei den Brennprozeß störende Stoffe, insbesondere zur Anreicherung im Kreislauf neigende Stoffe wie Alkalien, Chloride, und/oder Schwermetalle mittels eines Teilgasabzuges (Bypass) wenigstens bis zur Unschädlichkeitsgrenze aus dem Brennprozeß abgezweigt werden.

In der Zementchemie sowie der Zementtechnologie ist bekannt, daß eine Reihe von Stoffen wie beispielsweise Sulfide, Chloride, Alkaliverbindungen, Schwermetalle sowohl die Qualität eines Zementproduktes ungünstig beeinflussen als auch den Brennprozeß selbst erheblich stören können.

Beispielsweise werden beim Brennen von Zementrohgut, Alkalien, insbesondere Alkalichloride bei Temperaturen oberhalb 1000°C verflüchtigt und gelangen in das Ofenabgas. Dabei werden diese und andere flüchtige Stoffe vorzugsweise im Kontakt mit vorgewärmtem Rohmehl im Bereich der Vorwärmstufe am Rohmehl kondensiert und im Kreislauf wieder in den Brennofen zurückgeführt. Infolgedessen reichert sich dieser Kreislauf ständig mit den verflüchtigbaren Stoffen an. So kommt es schließlich zur Beeinträchtigung der Fließfähigkeit im Zementrohgut sowie zu Anbackungen und Verstopfungen innerhalb der Brennanlage mit Störungen bis zur Betriebsunterbrechung.

Es ist bekannt, störenden Kreislaufanreicherungen von verflüchtigbaren Stoffen durch Abzweigen von Teilabzugsgas zu begegnen. Dabei wird das Gas in einem Temperaturniveau abgezweigt, bei welchem die flüchtigen Stoffe noch nicht kondensiert sind.

Aus der UK-Patent-Application GB-2 043 853 A ist ein Verfahren zum Brennen von Zementklinker bekannt, bei dem flüchtige Substanzen wie Sulfide, Chloride, Alkalien etc. zumindest teilweise aus dem Brennprozeß entfernt werden. Dabei werden Ofengase aus einem Drehrohrofen mit Mittenabzug an einer Stelle zwischen Kalzinierzone und Klinkerzone entnommen und im Bypass abgeführt. Im Bereich der Entnahmestelle (substantially upstream of the baking zone) betragen die Gastemperaturen ca. 1300 bis 1400°C. Abgesehen von den sich durch nachteilig ergebenden mechanischen Problemen ist man gezwungen, das Gas dadurch Zugabe von Rohmehl zu kühlen, wofür infolge des Temperatursprunges von zum Beispiel 1.400 auf 600°C eine relativ große Rohmehlmenge benötigt wird. Dieses wird nach Wärmeaustausch zusammen mit kondensierten Stoffen zum Teil in die Bypassleitung rezirkuliert, und zum anderen Teil aus der Anlage abgezogen. Dabei fällt ein weitgehend von kondensierbaren Stoffen gereinigtes und unter die Kondensationstemperatur gekühltes Rauchgas sowie durch Wärmeaustausch mit Feststoffen erwärmte Brennluft an. Ein Teil dieser Feststoffe wird nach teilweisem Wärmeentzug verworfen. Als Nachteil ergibt sich bei dem bekannten Verfahren, daß ein erheblicher Teil der abgezogenen Feststoffbestandteile, insbesondere mit Kondensat von Sulfiden, Chloriden, Alkalien und/oder Schwermetallen befrachtetes Rohmehl durch besondere Abscheideeinrichtungen wie Filter, Zyklone etc. aus dem Gasstrom entfernt und zudem noch gesondert beseitigt werden müssen. Auch geht ein Anteil der vom Gas und den Feststoffen abgeführten Wärme verloren. Der für eine ökonomischere Wärmebilanz durch teilweise Wärmerückgewinnung erforderliche apparative aufwand (zum Beispiel gemäß Fig. 3 der genannten Anlage) ist im Verhältnis zum Gewinn sehr hoch und erfordert beispielsweise einen vierstufigen Schwebegas-Zyklonwärmeaustauscher.

Bei anderen bekannten Verfahren zur Unterbindung beispielsweise eines Alkalikreislaufs in einer Zementanlage sowie zur Reduzierung des Alkaligehalts im Klinker wird vorgeschlagen, durch einen Teilgasabzug, den sogenannten Bypass, einen Teil der Ofenabgase am unteren Bereich des Gassteigrohres zwischen Sinterofen und Schwebegasvorwärmer abzuzweigen und abzuführen. Der hierbei vom Bypass erfaßte hochalkalihaltige Ofenstaub kann jedoch nicht mehr in den Ofen zurückgeführt werden, sondern muß verworfen und ausgelaugt werden. Dabei kann wegen der Wärmewirtschaftlichkeit des Ofens nicht mehr als 25 %des Volumens der Ofenabgase vom Bypass abgezweigt werden. In Fällen, in denen Ausgangsmaterial einen (mineralogisch bedingten) sehr hohen Alkaligehalt aufweist, verbleibt demnach aus Gründen der Wärmewirtschaft ein Teil von Alkalien im Anlagensystem und führt zu schwierig zu beherrschenden Betriebsverhältnissen, insbesondere bei schwankenden Alkaligehalten im Rohmehl, und folglich vielfach zu unerwünschten Alkalierscheinungen sowohl im Endprodukt als auch in der Anlage (Zement-Data-Book 1977, Seiten 389, 392 bis 394).

Der Erfindung liegt die Aufgabe zugrunde, das Verfahren zur Herstellung von Zement, wobei Rohmaterial zu Klinker gebrannt, dieser gekühlt und zu einem mehlförmigen Zement-Endprodukt vermahlen wird, wobei den Brennprozeß störende Stoffe, insbesonder zur Anreicherung im Kreislauf neigende Stoffe wie Alkalien, Chloride und/oder Schwermetalle mittels eines Teilgasabzuges (Bypass) wenigstens bis zur Unschädlichkeitsgrenze aus dem Brennprozeß abgezweigt werden, dahingehend zu verbessern, daß einerseits auch ein Zementrohgut mit einem schwankenden und zeitweilig sehr hohen Gehalt an flüchtigen Stoffen mit geringstmöglichen Wärmeverlusten und mit geringestmöglichen Stoffverlusten ohne die Gefahr von schädlichen Kreislauf-Anreicherungen und andererseits mit ökonomisch tragbaren Investitionskosten verarbeitet werden kann, und wobei schließlich die Möglichkeit gegeben ist, den Gehalt an qualitäts-mindernden Schadstoffgehalten wie Alkalien, fallweise auch Chloride oder Sulfide im Endprodukt auf vorgegebene, zulässige Werte einzustellen.

Die Lösung der Aufgabe gelingt bei einem Verfahren der eingangs genannten Art zur Herstellung von Zement dadurch, daß aus dem gekühlten Klinker unter Zugabe von Zusatzstoffen ein Zwischenprodukt hergestellt wird, daß beim Teilgasabzug anfallendes Gas und/oder darin enthaltene Stoffe mindestens zum Teil in das Zwischenprodukt eingeleitet werden, und daß das Zwischenprodukt zum Zement-Endprodukt vermahlen wird.

Mit Vorteil wird hierdurch erreicht, daß einerseits ein Zementrohgut mit schwankenden und zeitweise hohen Gehalten an verflüchtigbaren Stoffen mit geringstmöglichen Wärmeverlusten sowie Stoffverlusten ohne die Gefahr von schädlichen Kreislauf-Anreicherungen bei geringen Investitionskosten verarbeitet werden kann, wobei es andererseits gelingt, die zulässigen Gehalte an den genannten Stoffen im Zement-Fertiggut auf vorgegebene, jeweils zulässige Werte einzustellen. Dabei wird diese vorteilhafte Möglichkeit weiterhin dadurch begünstigt, daß durch die Zugabe von Zusatzstoffen zum Klinker bei der Bereitung des Zwischenproduktes ein Materialpuffer entsteht, der sehr wirkungsvoll eine überraschend vorteilhafte und verlustfreie Korrektur der Endprodukt-Qualität ermöglicht, und welcher dazu noch die Möglichkeit erweitert, beim Teilgasabzug anfallendes Gas und/oder darin enthaltene Stoffe mindestens zum Teil in das Zwischenprodukt einzuleiten.

Eine Ausgestaltung des Verfahrens sieht vor, daß beim Teilgasabzug anfallendes Gas und/oder darin enthaltene Stoffe dem Zwischenprodukt beim Mahlen zugesetzt werden.

Auf diese Weise gelingt sehr vorteilhaft und problemlos die für die Qualität des Endproduktes notwendige Homogenisierung aller im Zwischenprodukt enthaltenen Stoffe.

Eine weitere vorteilhafte Ausgestaltung sieht vor, daß dem als Hauptbestandteil Klinker enthaltenden Zwischenprodukt Zusätze, insbesondere an Freikalk und alkalienarme beziehungsweise -freie Stoffe, wie granulierte Hüttenschlacke, Rohmehl, Industrieabfall, Gips als Sulfatträger, nasse Flugasche, Mergel, Kalkstein, Kreide, Ton etc. zugesetzt werden.

Weil das Zwischenprodukt durch die Zusätze fallweise ohne Qualitätsminderung des Zements mehr Bypasstoffe aufnehmen kann, wird folglich mit Vorteil von der Maßnahme Gebrauch gemacht, das Teilabzugsgas mit Feststoffen beladen in das Zwischenprodukt einzuleiten. Dabei werden Verluste an Energie, Gas und Feststoffen nahezu völlig vermieden und das Verfahren mit unkomplizierten Mitteln und Aufwand vorteilhaft optimiert.

Ein Vorteil in wärmewirtschaftlicher Hinsicht ergibt sich dadurch, daß das Teilabzugsgas in einem Temperaturbereich zwischen 500 und 1100° C aus dem Brennprozeß abgezweigt wird.

Bei dieser Temperatur liegen einerseits den Brennprozeß störende Stoffe, insbesondere die zur Anreicherung im Kreislauf neigenden Stoffe, wie Sulfide, Chloride, Alkalien und/oder Schwermetalle in der Dampfphase vor, und sie können andererseits durch relativ geringe Temperaturerniedrigung in bekannter Weise zur Kondensation gebracht und insbesondere an Rohmehl oder bevorzugt an feinem Filterstaub niedergeschlagen werden.

Eine weitere vorteilhafte Ausgestaltung sieht bei einem Zwischenprodukt, welches Klinker und wasserhaltige Zusatzstoffe enthält, vor daß zur Mahltrocknung des Zwischenproduktes das Teilabzugsgas als Trocknungsgas verwendet wird.

Je nach der dabei vom Fachmann erstellten Wärmebilanz kann dabei mit Vorteil ungekühltes Teilabzugsgas als Trocknungsgas verwendet werden. In diesem Falle ergibt die Wärmebilanz bei maximaler Nutzung der eingesetzten Primärenergie ein Optimum an Wirtschaftlichkeit.

Mit dem Verfahren wird andererseits in sehr vorteilhafter Weise ein sehr hohes Maß an betrieblicher Flexibilität erreicht. Wenn nämlich fallweise, insbesondere beim Mahlprozeß, ein geringerer Wärmemengenstrom benötigt werden sollte, kann das Teilabzugsgas vor Einleitung in das Zwischenprodukt und insbesondere vor Verwendung als Trocknungsgas so weit gekühlt werden, daß darin enthaltende kondensierbare Stoffe weitgehend kondensieren und in Staubform vorliegen.

Diese können je nach anfallender Menge teilweise in den Brennprozeß rezirkuliert, teilweise in das Zwischenprodukt eingeleitet und fallweise auch zum Teil aus dem Herstellungsprozeß abgezogen werden.

Damit das Teilabzugsgas beim Mahlvorgang wärmewirtschaftlich optimal genutzt wird, ist vorgesehen, dieses durch Kühlung auf bevorzugte Trocknungsgas-Temperaturen im Bereich zischen 500 und 600° C einzustellen. Als Kühlmedien können mit Vorteil Wärmetauscherabgas oder Rohmehl oder Frischluft oder Wasser verwendet werden, wobei diese Kühlmedien entweder einzeln oder fallweise zu mehreren verwendet werden.

Eine weitere sehr vorteilhafte Anwendung des Verfahrens ergibt sich bei der Vermahlung eines Zwischenproduktes, das im wesentlichen gekühlten, trockenen Klinker und keine beziehungsweise nur geringe Beimengungen anderer Stoffe enthält, dadurch, daß Teilabzugsgas vorzugsweise unter Verwendung von Wasser gekühlt wird, wobei staubförmiger Feststoff und gekühltes Gas anfällt, und daß Gas und/oder Feststoff wenigstens zum Teil dem Zwischenprodukt zugesetzt werden.

Eine Anlage zur Herstellung von Zement mit einer eine Vorwärmstufe, eine Kalzinierstufe, eine Sinterstufe sowie eine Kühlstufe aufweisenden Brennanlage, wobei die Brennanlage eine Einrichtung zum Ableiten von Teilabzugsgas aufweist, insbesondere zur Durchführung des Verfahrens nach den Ansprüchen 1 bis 10, ist dadurch gekennzeichnet, daß diese eine Mahlanlage mit einer Zwischenprodukt-Mischstation
sowie mit einem Luftstrom-Mahl- beziehungsweise Mahltrocknungsaggregat aufweist, und
daß die Einrichtung zum Ableiten von Teilabzugsgas mit der Mahlanlage durch wenigstens
eine Leitung verbunden ist.

Dabei kann mit Vorteil weiter vorgesehen sein,
daß in der Leitung ein vorzugsweise mit einer
Wärmetauscher-Zyklonstufe ausgebildeter Kühler angeordnet ist, dessen Feststoffaustrag durch
eine Leitung beziehungsweise Transporteinrichtung mit der Mahlanlage verbunden ist.
Weiter sieht eine Ausgestaltung vor, daß die
Bypassleitung eine Zuführung für Rohmehl beziehungsweise vorgewärmtes Rohmehl und
/beziehungsweise eine Wassereinspritzung aufweist.

Und schließlich sieht eine Ausgestaltung der
Anlage vor, daß aus der Abgasleitung der Vorwärmstufe eine Verbindungsleitung abzweigt, die
in die Bypassleitung einmündet. Auf diese Weise
kann problemlos jede gewünschte .Menge und
Temperatur des Trocknungsgasstromes eingestellt werden.

Die Erfindung wird in der Zeichnung in einer
bevorzugten Ausführungsform gezeigt, wobei
aus der Zeichnung weitere vorteilhafte Einzelheiten der Erfindung entnehmbar sind.

Es zeigen:

Fig. 1      eine schematische Darstellung einer
Zementproduktionsanlage zur Durchführung des erfindungsgemäßen Verfahrens mit einer Brennanlage und
einer mit dieser zu einer Funktionseinheit integrierten Mahlanlage für
das Endprodukt,

Fig. 2      in schematischer Darstellung einen
Teil der gleichen Zementproduktionsanlage mit unterschiedlichen Entnahmestellen für Teilgasabzug aus der
Anlage.

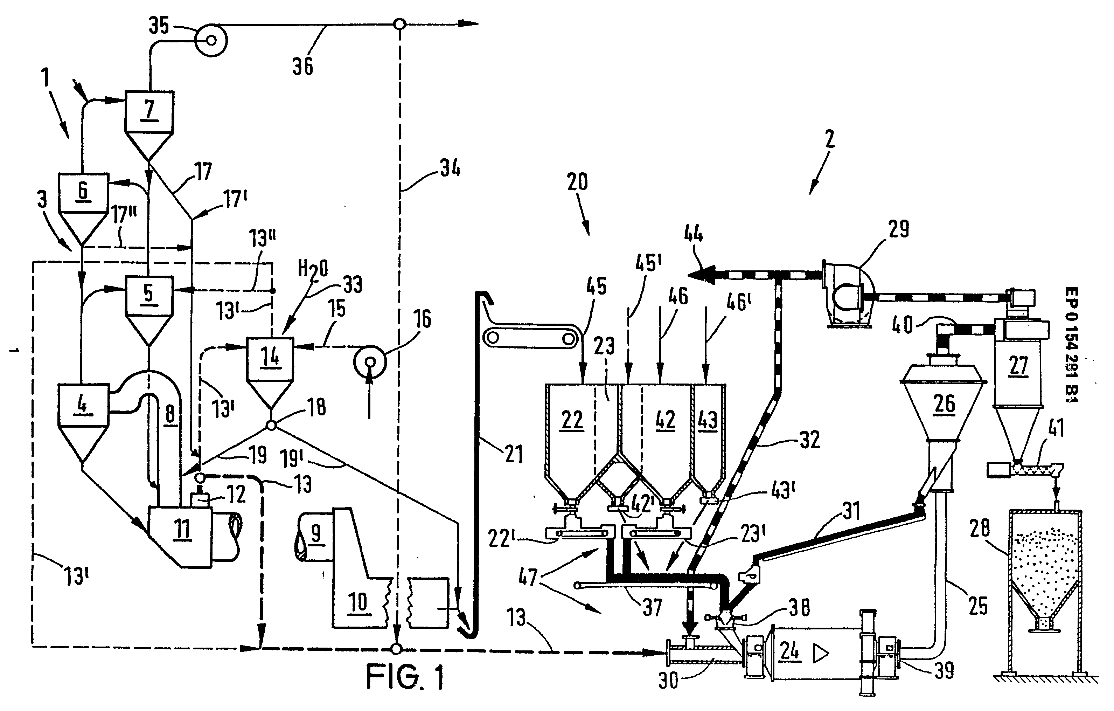

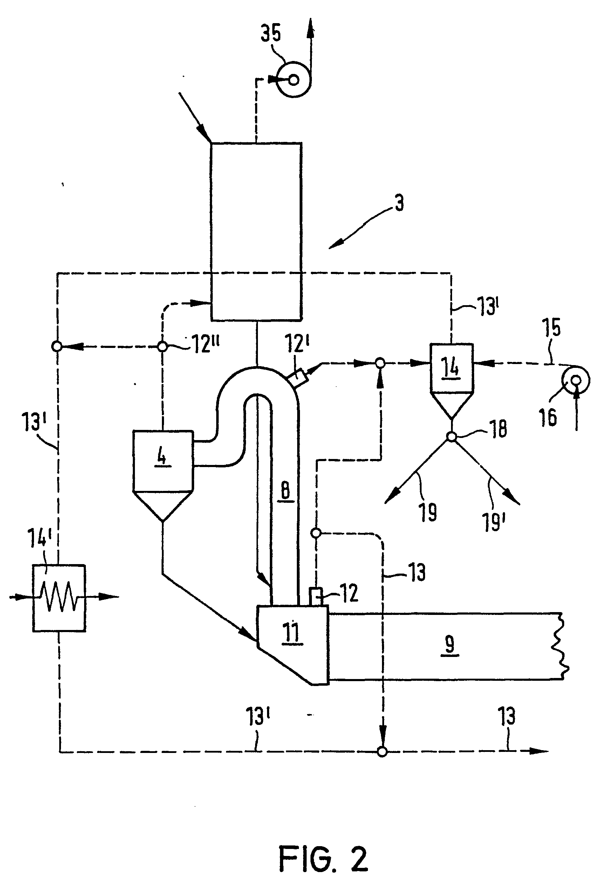

Das Funktionsschema zeigt eine Brennanlage 1
und eine mit dieser funktionell gemäß Fig. 1
verbundene Mahlanlage 2. Die Brennanlage 1
besitzt eine Vorwärmstufe 3 mit vier in Reihe
geschalteten Schwebegas-Wärmetauscherzyklonen 4, 5, 6 und 7. Dem Wärmetauscherzyklon 4 ist in Richtung des Feststoffdurchlaufes ein Calcinator 8 angeschlossen,
an den seinerseits der Sinterofen 9 und als letztes
Glied in der Kette der Kühler 10 anschließt. Die
Ofeneinlaufkammer 11 des Sinterofens 9 weist
einen Bypass-Stutzen 12 zur Entnahme von
Teilabzugsgas auf. Hieran schließt sich die Bypassleitung 13 an. Andere und/oder zusätzliche
Entnahmestellen 12', 12" für Teilabzugsgas sind in
Fig. 2 angegeben.

Die Leitung 13 führt im weiteren Verlauf zum
Mühleneingang 30 der Mahlanlage 2. Mit diesem
Leitungsverlauf kann erforderlichenfalls ungekühltes sowie mit Feststoffen beladenes Teilabzugsgas in die Zwischenprodukt-Mischstation 20
beziehungsweise in das Mahlaggregat 24 eingeleitet werden. Wenn fallweise eine größere
Teilabzugsgasmenge auf einem geringeren Temperaturniveau in die Zwischenprodukt-Mischstation 20 beziehungsweise in das Mahltrocknungsaggregat 24 eingeleitet werden soll, steht hierfür der mit 13' bezeichnete Leitungsverlauf der
Bypassleitung zur Verfügung. Hierbei ergibt sich
eine Möglichkeit der partiellen Abkühlung von
Teilabzugsgas beispielsweise durch Einleiten von
Rohmehl, mit der Fall-Leitung 17, welche vom
Austrag des Wärmetauscherzyklons 7 abgezweigt ist. Es kann jedoch auch kaltes Rohmehl
entsprechend der Einleitung 17' oder aus einem
anderen Zyklonwärmetauscher, zum Beispiel aus
dem Wärmetauscher 6 entsprechend der gestrichelten Linie 17" wärmeres Rohmehl abgezweigt und in die Teilabzugsgasleitung 13'
eingeleitet werden. In der Bypassleitung 13' ist
ein Kühler/Abscheider 14 angeordnet. In diesen
kann fallweise als zusätzliches oder alternatives
Kühlmedium Wasser, angedeutet durch den Pfeil
33, oder Kühlluft mit Hilfe des Gebläses 16 und
der Leitung 15 eingeleitet werden. Dabei kondensieren bei Unterschreiten der Kondensationstemperatur insbesondere an der Oberfläche,
von kalten Feststoffpartikeln die im Teilabzugsgas enthaltenen, im Brennprozeß unerwünschten flüchtigen Stoffe und werden im Kühler
/Abscheider 14 im Austrag 18 aus dem Teilabzugsgas entfernt. Mit der Feststoffleitung 19 kann
ein Teil dieser Feststoffe in den Calcinator 8
rezirkuliert werden, während derjenige Feststoffanteil, der zur Inhibierung von schädlicher
Kreislaufanreicherung aus dem Brennprozeß
entfernt werden muß, mit der Feststoffleitung 19'
in die Zwischenprodukt-Mischstation 20 beispielsweise mit Hilfe der Transporteinrichtung 21
eingeleitet wird. Gereinigtes Teilabzugsgas gelangt durch die Bypassleitung 13' nach Austritt
aus dem Kühler/Abscheider 14 ebenfalls in die
Zwischenprodukt-Mischstation 20, wobei es vorzugsweise in den Mühleneingang 30 eingeleitet
wird. Große Flexibilität der Anlage wird dadurch
erreicht, daß zur teilweisen Einleitung von gereinigtem Teilabzugsgas in die Vorwärmstufe 3
eine Zweigleitung 13" aus der Bypassleitung 13'
abzweigt und zum Beispiel in den Wärmetauscherzyklon 5 einmündet. Die Einmündung in
den Zyklon 5 ist jedoch nicht zwingend, sie kann
je nach Menge und Temperatur des gereinigten
Teilabzugsgases auch an anderer Stelle des
Vorwärmersystems 3 erfolgen. Insoweit ist die
hierfür gezeigte Zweigleitung 13" in ihrer Anordnung lediglich beispielhaft zu verstehen. Eine
weitere Flexibilität der Anlage und des darin
durchgeführten Verfahrens und zwar zur problemlosen Einstellung von Menge und Temperatur des Bypass- und Mahltrocknungsgases ergibt
sich mit der Leitung 34, welche in Gasrichtung
hinter dem Wärmetauscher-Ventilator 35 aus der
Abgasleitung 36 abzweigt und in die Bypassleitung 13 einmündet. Mit Hilfe dieser Leitung 34
können dem Abgasstrom aus 36 fallweise Kühlgase im Temperaturniveau um 300°C entnommen und dem Teilabzugsgas zugemischt werden. Dabei wird das entnommene Abgas aufgeheizt und das Teilabzugsgas abgekühlt. Man kann auf diese Weise den für die Zementmühle 24 hinsichtlich Menge und Temperatur optimalen Gasstrom einstellen.

Die Mahlanlage 2 ist mit der Brennanlage 1 einerseits durch die Bypassleitung 13 und andererseits durch die Transporteinrichtung 21 verbunden und auf diese Weise funktionell integriert. Sie weist an der Feststoff-Aufgabeseite die Zwischenprodukt-Mischstation 20 auf. Diese umfaßt im gezeigten Beispiel eine Mehrfach-Siloanordnung mit zwei Klinkersilos 22 und 23 sowie Zusatzstoffsilos 42 und 43. Für den Fachmann selbstverständlich können weitere Silos für Zusatzstoffe oder unterschiedliche Klinkersorten angeordnet sein. Insoweit ist die Anordnung der Zwischenprodukt-Mischstation 20 mit vier Silotaschen (22, 23, 42, 43) lediglich beispielhaft zu verstehen. Jedem der Silos ist eine mengendosierbare (gravimetrische oder volumetrische) Abzugseinrichtung 22', 23', 42', 43' zugeordnet. Der Austrag erfolgt über den Abzug 37 mittels Eintragsschleuse 38 in das Mahlaggregat 24. Die Zwischenprodukt-Mischstation ist auf diese Weise sehr vorteilhaft als Gemengeanlage 47 ausgebildet, die zum Beispiel über Computer steuerbar die unterschiedlichen Gemenge-Rezepturen herstellt. Im Bereich der Zwischenprodukt-Mischstation 20 findet auch der Eintrag von Teilabzugsgas mit der Leitung 13 in den verlängerten Mühleneingang 30 statt. In diesen mündet ebenfalls die Mühlenumluftleitung 32, die von der Druckseite des Mühlenumluftgebläses 29 abzweigt. An den Mühlenausgang 39 ist die Mahlgutleitung 25 angeschlossen, durch welche mit Mahlgut befrachtetes Mühlengas in den Sichter 26 geführt wird. Dieser scheidet Fertiggut mit der Leitung 40 aus, während Überkorn mit der Grießrückführung 31 ebenfalls in die Eintragsschleuse 38 eingeleitet wird. Fertiggut fällt im Abscheider 27 an und wird durch das Abzugsorgan 41 in das Fertiggutsilo 28 gefördert.

Im vorliegenden Ausführungsbeispiel ist die Silotasche 22 für Klinker der Brennanlage 1 vorgesehen, der aus dem Kühler 10 über die Transporteinrichtung 21 in die Silotasche 22 gefördert wird. Eine zweite Silotasche 23 ist beispielsweise für eine andere Klinkersorte vorgesehen, die mit der gleichen Brennanlage 1 unter Verwendung einer anderen Rohgutzusammensetzung erbrannt werden kann. Die Silotasche 42 ist beispielsweise vorgesehen für granulierte, nasse Hüttenschlacke, während die Silotasche 43 fallweise für feuchten Ton, Mergel, Gips oder ähnliche Stoffe bestimmt sein kann. Durch die Gemengeanlage 47 wird in bekannter Weise eine computergesteuerte Rezeptur von Stoffen zusammengemengt und durch die Transporteinrichtung 37 zusammen mit vom Sichter 26 ausgeschiedenem Überkorn 31 durch die Eintragsschleuse 38 in die Aufgabeseite der Mühle 24 aufgegeben. Gleichzeitig wird der Mühle, entsprechend ihrem Bedarf an Trocknungsgas, Teilabzugsgas von vorgegebener Menge und Temperatur mit der Leitung 13 zugeführt. Dieses Gas zirkuliert nach Durchtritt durch die Mühle im Systemkreislauf der Luftstrom-Mahlanlage 2 mit Hilfe der vom Mühlen-Ventilator 29 erzeugten Druckdifferenz. Rückführgas gelangt durch die Gasleitung 32 wieder in den Luftstromkreislauf der Mahlanlage 2 zurück, während Abgas aus Mahlanlage 2 durch die Abgasleitung 44 abgeführt wird.

Die Flexibilität der Anlage und des erfindungsgemäßen Verfahrens ermöglicht auf diese Weise eine Trocknung der verschiedensten Zwischenprodukte mit Stoffgemengen von unterschiedlichen Wassergehalten in der Zementmühle 24. Solche Gemenge enthalten beispielsweise außer Klinker Hüttensande zur HOZ und EPZ-Herstellung; Industrieabfallgipse als Sulfatträger; nasse Flugasche; feuchte Zusätze von Mergel, Kalkstein, Kreide, Ton, feuchte Puzzolane und dergleichen.

Bei Entnahme von Teilabzugsgas, wie gezeigt, in der Einlaufkammer 11 des Sinterofens 9 oder gemäß Fig. 2 im Bereich der Calcinierstufe 8 bei 12' und/oder im Bereich der Wärmetauscherstufe 3 bei 12" und Zufügung von Kühl- oder Zumischgas hinter dem Wärmetauscher-Ventilator 35 ist die gesamte integrierte Anlageneinheit mit einem relativ geringen elektrischen Kraftbedarf betreibbar. Im gezeigten Beispiel, bei dem weder ein Stoffverlust noch Gasverlust durch die Bypass-Abzweigung 12 erfolgt, wird ein Höchstmaß an betriebswirtschaftlicher Ökonomie mit einem äußerst geringen Aufwand an Investition und Energie verwirklicht.

Aus der Darstellung gemäß Fig. 2 eines Teils der Zementproduktionsanlage mit Entnahmestellen 12 beziehungsweise 12' und/oder 12" für Teilabzug von Gas sind jeweils gleiche Anlagenteile mit gleichen Bezugsziffern bezeichnet. Dabei ermöglicht ein Abzug von Gas bei 12' einen gleichzeitigen Abzug von Mehl. Soll die Mehlmenge anteilmäßig zum Teilabzugs-Gasstrom verringert werden, bietet sich ein Teilabzug bei 12" an und Vermischung mit bei 12' abgezogenem Gas. Diese Maßnahme ergibt mehr Gas und weniger Feststoff. Ein Vorteil von teilweise mehlbeladenem Gasabzug ergibt sich durch Scheuerwirkung des Feststoffs, wodurch die Leitungen 13, 13' von Ansätzen freigehalten werden.

Im Falle der vorgesehen intermittierenden Vornahme des Teilgasabzuges, vorzugsweise zeitlich synchron mit dem Mahl- beziehungsweise Mahltrocknungsbetrieb ergibt sich der Vorteil, daß sich der Kreislauf der abzuzweigenden Stoffe "erholt", das heißt, daß sich der Kreislauf in der abzugsfreien Zeit mit diesen Stoffen anreichert, wobei dann der temporär wiedereinsetzende Teilgasabzug an abzuscheidenden Stoffen reichhaltiger und somit effektiver wird. Dies steigert somit auch die Wirtschaftlichkeit des Teilgasabzuges nochmals zusätzlich.

Das erfindungsgemäße Verfahren und die entsprechende Anlage erfüllen somit in idealer Weise die eingangs gestellte Aufgabe.

## Patentansprüche

1. Verfahren zur Herstellung von Zement, wobei Rohmaterial im Durchlauf durch eine Vorwärm-, Calcinier- und Sinterzone zu Klinker gebrannt, dieser gekühlt und zu einem mehlförmigen Zement-Endprodukt vermahlen wird, wobei den Brennprozeß störende Stoffe, insbesondere zur Anreicherung im Kreislauf neigende Stoffe wie Sulphide, Chloride, Alkalien und/oder Schwermetalle mittels eines Teilgasabzuges (Bypass) wenigstens bis zur Unschädlichkeitsgrenze aus dem Brennprozeß abgezweigt werden, dadurch gekennzeichnet, daß aus dem Klinker unter Zugabe von Zusatzstoffen ein Zwischenprodukt hergestellt wird, daß beim Teilgasabzug anfallendes Gas und/oder darin enthaltene Stoffe mindestens zum Teil in das Zwischenprodukt eingeleitet werden, und daß das Zwischenprodukt zum Zement-Endprodukt vermahlen wird.

2. Verfahren nach Anspruch 1, dadurch gekennzeichnet, daß beim Teilgasabzug anfallendes Gas und/oder darin enthaltene Stoffe dem Zwischenprodukt beim Mahlen zugesetzt werden.

3. Verfahren nach Anspruch 1 oder 2, dadurch gekennzeichnet, daß dem Zwischenprodukt Zusätze, insbesondere an Freikalk und Alkalien arme beziehungsweise freie Stoffe, wie granulierte Hüttenschlacke, Rohmehl, Industrieabfallgips als Sulphatträger, nasse Flugasche, Mergel, Kalkstein, Kreide, Ton etc. zugesetzt werden.

4. Verfahren nach Anspruch 1 und 2, dadurch gekennzeichnet, daß Teilabzugsgas mit Feststoffen beladen in das Zwischenprodukt eingeleitet wird.

5. Verfahren nach einem der Ansprüche 1 bis 4, dadurch gekennzeichnet, daß Teilabzugsgas in einem Temperaturbereich zwischen 500 und 1.100 °C aus dem Brennprozeß abgezweigt wird.

6. Verfahren nach einem der Ansprüche 1 bis 5, dadurch gekennzeichnet, daß beim Teilgasabzug mit Feststoffen beladenes Gas aus der Calcinierzone abgezweigt wird.

7. Verfahren nach einem der Ansprüche 1 bis 5, dadurch gekennzeichnet, daß ein Teilgasabzug aus der Vorwärmzone vorgenommen wird.

8. Verfahren nach einem der Ansprüche 1 bis 7, wobei das Zwischenprodukt Klinker und wasserhaltige Zusatzstoffe enthält, dadurch gekennzeichnet, daß zur Mahltrocknung des Zwischenproduktes Teilabzugsgas als Trocknungsgas verwendet wird.

9. Verfahren nach einem der Ansprüche 1 bis 8, dadurch gekennzeichnet, daß Teilabzugsgas ungekühlt als Trocknungsgas verwendet wird.

10. Verfahren nach einem der Ansprüche 1 bis 6, dadurch gekennzeichnet, daß Teilabzugsgas vor Einleitung in das Zwischenprodukt und insbesondere vor Verwendung als Trocknungsgas für die Mahltrocknung soweit gekühlt wird, daß darin enthaltene kondensierbare Stoffe weitgehend kondensieren und vorzugsweise in Staubform vorliegen.

11. Verfahren nach Anspruch 10, dadurch gekennzeichnet, daß Teilabzugsgas auf Temperaturen im Bereich zwischen 500°C und 600°C gekühlt wird, wobei als Kühlmedium Wärmetauscherabgas oder Rohmehl oder Frischluft oder Wasser verwendet werden, und wobei diese Kühlmedien einzeln oder fallweise mehrere davon verwendet werden.

12. Verfahren nach Anspruch 1, dadurch gekennzeichnet, daß bei der Vermahlung eines Zwischenproduktes, das im wesentlichen gekühlten, trockenen Klinker und keine beziehungsweise nur geringe Beimengungen anderer Stoffe enthält, Teilabzugsgas vorzugsweise unter Verwendung von Wasser gekühlt wird, wobei staubförmiger Feststoff und gekühltes Gas anfällt, und daß das Gas und/oder der Feststoff wenigstens zum Teil dem Zwischenprodukt zugesetzt werden.

13. Anlage zur Herstellung von Zement mit einer eine Vorwärmstufe, eine Calcinierstufe, eine Sinterstufe sowie eine Kühlstufe aufweisenden Brennanlage, wobei die Brennanlage eine Einrichtung zum Teilabzug von Gas aufweist insbesondere zur Durchführung des Verfahrens nach den Ansprüchen 1 bis 12, dadurch gekennzeichnet, daß diese mit einer Mahlanlage (2) mit einer Zwischenprodukt-Mischstation (20) sowie mit einem Luftstrom-Mahl- beziehungsweise Mahltrocknungsaggregat (24) in Verbindung steht, und daß die Einrichtung (12, 12', 12") zum Teilabzug von Gas mit der Mahlanlage (2) durch wenigstens eine Leitung (13, 13') verbunden ist.

14. Anlage nach Anspruch 13, dadurch gekennzeichnet, daß Entnahmestellen (12, 12', 12") für Teilabzug von Gas im Bereich des Ofeneinlaufes (12) und/oder fallweise (12') im Bereich der Calcinierstufe (8) und/oder fallweise (12") im Bereich der Vorwärmstufe vorgesehen sind.

15. Anlage nach Anspruch 13 oder 14, dadurch gekennzeichnet, daß in der Leitung (13') ein vorzugsweise mit einer Wärmetauscher-Zyklonstufe (14, 14') ausgebildeter Kühler angeordnet ist, dessen Feststoffaustrag (18) durch eine Leitung (19') beziehungsweise Transporteinrichtung (21) mit der Mahlanlage (2) verbunden ist.

16. Anlage nach einem der Ansprüche 13 bis 15, dadurch gekennzeichnet, daß die Gasleitung (13') eine Zuführung (17, 17', 17") für Rohmehl beziehungsweise vorgewärmtes Rohmehl und /beziehungsweise eine Wassereinspritzung (48) aufweist.

17. Anlage nach einem der Ansprüche 13 bis 16, dadurch gekennzeichnet, daß aus der Abgasleitung (36) der Vorwärmstufe (3) eine Verbindungsleitung (34) abzweigt, die in die Gasleitung (13) einmündet.

18. Verfahren zum Betrieb der Anlage nach einem der vorhergehenden Ansprüche, dadurch gekennzeichnet, daß der Teilgasabzug intermittierend und zeitlich zugleich mit dem Mahlbetrieb des Mahltrocknungsaggregates (24) vorgenommen wird, wobei der Mahlbetrieb intermittierend, zum Beispiel in Zeiten billigeren Strombezuges, insbesondere zur Nachtzeit vorgenommen wird.


## Claims

1. A method of manufacturing cement, in which raw material passing through a preheating calcining and sintering zone is roasted to form clinker which is cooled and ground to form a powdery final cement produkt, in which substances which disrupt the roasting process, particularly substances which tend to become concentrated in the circulation, such as sulphides, clorides, alkalies and/or heavy metals are branched off from the roasting process with the aid of a partial gas outlet (bypass) at least until the non toxic limit is reached, characterised in that an intermediate product is manufactured from the clinker by addition of additives, that gas obtained during partial gas outlet and/or substances contained therein are introduced into the intermediate product at least partially and that the intermediate produkt is ground to form the final cement product.

2. A method according to claim 1, characterised in that gas obtained during partial gas outlet and/or substances contained therein are added to the intermediate product during grinding.

3. A method according to claim 1 or 2, characterized in that additons are added to the intermediate product, more particularly substances which contain no or very little free lime and alkalies such as granular slag, raw powder, industrial gypsum waste as sulphate containing substance, wet flue dust, marl, limestone, chalk, clay etc.

4. A method according to claim 1 and 2, characterized in that partial outlet gas laden with solids is introdced into the intermediate product.

5. A method according to any one of claims 1 to 4, characterised in that partial outlet gas is branched off from the roasting process in a temperature range of between 500 and 1,100°C.

6. A method according to any one of claims 1 to 5, characterised in that during partial gas outlet gas which is laden with solids is branched off from the calcining zone.

7. A method according to any one of claims 1 to 5, characterised in that a part of the gas is drawn off from the preheating zone.

8. A method according to any one of claims 1 to 7, in which the intermediate product contains clinker and additives containing water, characterized in that partial outlet gas is used as the drying gas for the purpose of grinding and drying the intermediate product.

9. A method according to any one of claims 1 to 8, characterised in that partial outlet gas is used uncooled as the drying gas.

10. A method according to any one of claims 1 to 6, characterized in that partial outlet gas is cooled before being introduced into the intermediate product and particularly before being used as a drying gas for grinding and drying, until substances which may be condensed and contained therein are largely condensed and are preferably present in the form of dust.

11. A method according to claim 10, characterized in that partial outlet gas is cooled to temperatures in the range of between 500°C and 600°C, in which heat exchanger waste gas or raw powder or fresh air or water are used as the coolant, and in which these coolants are used singly or as the case may be a plurality of them are used.

12. A method according to claim 1, characterised in that when grinding an intermediate product which contains substantially cooled, dry clinker and no or few admixtures of other substances, partial outlet gas is cooled preferably using water, and dust like solid and cooled gas is obtained and that the gas and/or the solid is added at least partially to the intermediate product.

13. A plant for manufacturing cement with a roasting plant, which has a preheating stage, a calcining stage, a sinterig stage and a cooling stage, in which the roasting plant has a device for the partial outlet of gas, more particularly for carrying out the method according to claims 1 to 12, characterized in that this plant is connected to a grinding plant (2) having an intermediate product mixing station (20) and an air flow grinding or grinding and drying machine (24), and that the device (12, 12' 12") for the partial outlet of gas is connected to the grinding plant (2) by at least one line (13, 13').

14. A plant according to claim 13, characterized in that removal points (12, 12', 12") for partial outlet of gas are provided in the region of the furnace inlet (12) and/or as the case may be (12') in the region of the calcining stage (8) and/or as the case may be (12") in the region of the preheating stage.

15. A plant according to claim 13 or 14, characterized in that a cooler preferably formed with a heat exchanger cyclone stage (14, 14') is arranged in the line (13'), the solid throughput (18) of the said cooler being connected to the grinding plant (2) by a line (19') or transport device (21).

16. A plant according to any one of claims 13 to 15, characterised in that the gas line (13') has a supply (17, 17', 17") for raw powder or preheated raw powder and/or a water injection means (48).

17. A plant according to any one of claims 13 to 16, characterized in that a connecting line (34) branches off from the waste gas line (36) of the preheating stage (3), said connecting line opening into the gas line (13).

18. A method of operating the plant according to any one of the preceding claims, characterized in that the partial gas outlet is implemented intermittently and in terms of time at the same time as the grinding operation of the grinding and drying machine (24), in which the grinding operation is implemented intermittently, for example at times when consuming electricity is cheaper, particularly at night.

## Revendications

1. Procédé pour la fabrication de ciment, selon lequel la matière première est calcinée en parcourant une zone de préchauffage, de calcination et de frittage sous forme de clinker, qui est refroidi et broyé en un produit final de ciment farineux et selon lequel des matières gênant le procédé de calcination, notamment des matières ayant tendance à se concentrer dans le circuit, telles que des sulfures, des chlorures, des alcalis et/ou des métaux lourds sont dérivées hors du procédé de calcination au moyen d'une évacuation partielle de gaz (bypass), du moins jusqu'à la limite de l'inoffensivité, caractérisé en ce qu'un produit intermédiaire est fabriqué à partir du clinker, en ajoutant des additifs, en ce que le gaz issu de l'évacuation partielle de gaz et/ou des matières qu'il contient sont introduit(s) dans le produit intermédiaire au moins en partie en ce que le produit intermédiaire est broyé pour donner le produit final de ciment.

2. Procédé selon la revendication 1 caractérisé en ce que le gaz issu de l'évacuation partielle de gaz et/ou les matières qui y sont contenues sont ajoutées au produit intermédiaire lors du broyage.

3. Procédé selon la revendication 1 ou 2, caractérisé en ce qu, il est en particulier ajouté au produit intermédiaire des matières pauvres en chaux libre ou en alcalis ou qui en sont dépourvues, telles que des scories granulées de laitiers, du gypse provenant de déchets industriels en tant que support de sulfate, de la cendre volante humide, de la marne, de la farine crue, du carbonate de chaux, de la craie, de l'argile, etc.

4. Procédé selon les revendications 1 et 2, caractérisé en ce que le gaz d'évacuation partielle est introduit chargé de matières solides dans le produit intermédiare.

5. Procédé selon l'une des revendication 1 à 4, caracérisé en ce que le gaz d'évacuation partielle est dérivé du procédé de calcination dans une plage de température entre 500 et 1100°C.

6. Procédé selon l'une des revendication 1 à 5, caractérisé en ce que du gaz chargé de matières solides est, lors de l'évacuation partielle de gaz, dérivé à partir de la zone de calcination.

7. Procédé selon l'une des revendication 1 à 5, caractérisé en ce qu'il est procédé à une évacuation partielle de gaz à partir de la zone de préchauffage.

8. Procédé selon l'une des revendications 1 à 7, où le produit intermédiaire contient du clinker et des matières additives contenant de l'eau, caractérisé en ce que du gaz d'évacuation partielle est utilisé comme gaz de séchage pour le séchage dans le broyeur du produit intermédiaire.

9. Procédé selon l'une des revendications 1 à 8, carcactérisé en ce que du gaz d'évacuation partielle est utilisé non refroidi comme gaz de séchage.

10. Procédé selon l'une des revendications 1 à 6, caractérisé en ce que du gaz d'évacuation partielle est, avant introduction dans le produit intermédiaire et notamment avant son utilisation comme gaz de séchage pour le séchage dans le broyeur, suffisamment refroidi pour que les matières condensables qui y sont contenues se condensent dans une large mesure et se présentent de préférence sous une forme pulvérulente.

11. Procédé selon la revendication 10, caractérisé en ce que le gaz d'évacuation partielle est refroidi dans une plage de température entre 500°C et 600°C, en ce qu'il est utilisé comme agent de refroidissement du gaz perdu d'échangeur de chaleur ou de la farine brute ou de l'air frais ou de l'eau et en ce que ces agents de refroidissement sont utilisés individuellement ou, si besoin est, à plusieurs.

12. Procédé selon la revendication 1, caractérisé en ce que, lors du broyage du produit intermédiaire qui contient du clinker essentiellement refroidi et sec et des additions nulles ou faibles d'autres matières, le gaz d'évacuation partielle est, de préférence, refroidi en utilisant de l'eau, en ce qu'il en résulte de la matière solide pulvérulente et du gaz refroidi et en ce que le gaz et/ou la matière solide est ajoutée au moins en partie au produit intermédiaire.

13. Installation pour la fabrication de ciment avec une installation de calcination présentant un étage de préchauffage, un étage de calcination, un étage de frittage et un étage de refroidissement, sur laquelle l'installation de calcination présente un dispositif d'évacuation partielle de gaz, en particulier pour l'exécution du procédé selon les revendications 1 à 12, caractérisé en ce que celui-ci est relié à une installation de broyage (2), à une station au produit intermédiaire (20) et à un organe de broyage à courant d'air ou de séchage dans le broyeur et en ce que le dispositif (12, 12', 12") est relié par au moins une conduite (13, 13') à l'installation de broyage (2) pour l'évacuation partielle de gaz.

14. Installation selon la revendication 13, caractérisée en ce que des points de prélèvements (12, 12', 12") pour l'évacuation partielle de gaz sont prévus dans la région de l'entrée du four (12) et/ou à l'occasion (12') dans la région de l'étage de calcination (8) et/ou, à l'occasion (12") dans la région de l'étage de préchauffage.

15. Installation selon la revendication 13 ou 14, caractérisée en ce qu'il est disposé sur la conduite (13') un réfrigérateur constitué de préférence par un étage avec un cyclone-échangeur de chaleur (14, 14') dont la sortie de matières solides (18) est reliée par une conduite (19') ou plutôt par un dispositif de transport (21) à l'installation de broyage (2).

16. Installation selon l'une des revendications 13 à 15, caractérisée en ce que la conduite de gaz (13') comporte une alimentation (17, 17', 17") pour de la farine brute ou pour de la farine crue préchauffée et/ou pour une injection d'eau (46).

17. Installation selon l'une des revendications 13 à 16, caractérisée en ce qu'il est dérivé sur la conduite de gaz perdu (36) de l'étage préchauffeur (3) une conduite de raccordement (34), qui débouche dans la conduite de gaz (13).

18. Procédé pour l'exploitation de l'installation selon l'une des revendications précédentes, caractérisé en ce que l'évacuation partielle de gaz est réalisée de manière intermittente et synchronisée dans le temps avec l'exploitation du groupe de séchage dans le broyeur (24) et en ce que l'exploitation du broyeur de manière intermittente est réalisée, par exemple pendant les périodes où la fourniture de courant est moins coûteuse, notamment la nuit.

FIG. 1

EP 0 154 291 B1

FIG. 2